# EUROPÄISCHE PATENTSCHRIFT

(11) **EP 3 708 683 B1**
(45) Veröffentlichungstag und Bekanntmachung des Hinweises auf die Patenterteilung: **03.03.2021**
(21) Anmeldenummer: 19161968.3
(22) Anmeldetag: 11.03.2019
(51) Int. Cl.: C21B 7/06, F27B 3/14, F27D 1/00, F27D 1/12, F27D 9/00

(54) **METALLURGISCHER OFEN**
METALLURGICAL FURNACE
FOUR MÉTALLURGIQUE

(43) Veröffentlichungstag der Anmeldung: 16.09.2020
(73) Patentinhaber: Refractory Intellectual Property GmbH & Co. KG, 1100 Wien (AT)
(72) Erfinder: Zivanovic, Bojan, 1100 Wien (AT)
(74) Vertreter: Berkenbrink, Kai-Oliver

(56) Entgegenhaltungen:
- EP-A1- 2 851 640
- US-A- 2 107 524
- US-A- 2 281 951

## Beschreibung

Die Erfindung betrifft einen metallurgischen Ofen, insbesondere einen metallurgischen Ofen zur Aufnahme einer Metallschmelze.

Metallurgische Öfen zur Aufnahme einer Metallschmelze sind beispielsweise in Form von Hochöfen, Elektroöfen oder in Form von Öfen, die nach dem Schwebeschmelzverfahren (englisch: "Flash Smelting") arbeiten, bekannt.

Solche metallurgischen Öfen zur Aufnahme einer Metallschmelze umfassen eine Ofenwandung, die einen Ofenraum umschließt. Der Ofenraum ist zur Aufnahme der Metallschmelze ausgebildet. Insbesondere die Bereiche der Ofenwandung, die mit der Metallschmelze in Kontakt treten, weisen ein Mauerwerk aus feuerfesten Steinen auf, wobei die feuerfesten Steine mit der Metallschmelze in Kontakt treten.

Aufgrund der hohen Temperaturen der Metallschmelze werden die feuerfesten Steine thermisch hoch beansprucht, wodurch die feuerfesten Steinen einem thermischen Verschleiß unterliegen. Um diesen thermischen Verschleiß zu reduzieren, ist es bekannt, die feuerfesten Steine zu kühlen. Insoweit ist es bekannt, das aus den feuerfesten Steinen gebildete Mauerwerk auf der der Metallschmelze abgewandten Seite des Mauerwerkes, also auf der Kaltseite der feuerfesten Steine, thermisch mit einem Metallelement zu verbinden. Die von der Metallschmelze auf die feuerfesten Steine übertragene Wärme kann dabei durch das thermisch mit den feuerfesten Steinen verbundene Metallelement von dem feuerfesten Steinen abgeleitet werden.

Beispielsweise ist ein solches Metallelement in Form einer Kupferplatte bekannt, die beispielsweise auch Kanäle zum Durchleiten eines Kühlfluides aufweisen kann, so dass die auf die Kupferplatte übertragene Wärme auf das Kühlfluid übertragen und über dieses aus der Kupferplatte abgeleitet werden kann.

Neben der Reduzierung der thermischen Beanspruchung der feuerfesten Steine des Mauerwerks durch eine solche Kühlung hat die Kühlung der feuerfesten Steine auch den Vorteil, dass sich auf der Heißseite der feuerfesten Steine, also auf der der Metallschmelze zugewandten Seite der feuerfesten Steine, Anbackungen, beispielsweise aus erstarrter Schlacke, bilden können, die die feuerfesten Steine vor einer mechanischen und korrosiven Beanspruchung durch die Metallschmelze und die Schlacke schützen können.

Ein metallurgischer Ofen, der ein solches Kühlelement in Form einer wassergekühlten Kupferplatte umfasst, ist beispielsweise in EP 1 337 800 B1 offenbart.

Um ein Lösen der feuerfesten Steine aus dem Mauerwerk während des Betriebes des metallurgischen Ofens zu vermeiden, ist es bekannt, die feuerfesten Steine durch Haltemittel im Mauerwerk zu fixieren.

EP 1 337 800 B1 offenbart insoweit, die feuerfesten Steine in horizontal verlaufenden Nuten, die im Kühlelement verlaufen, zu fixieren.

Aufgrund der beim Aufheizen und Abkühlen des metallurgischen Ofens sowie in geringerem Ausmaß auch während des Betriebes des metallurgischen Ofens in den feuerfesten Steinen auftretender Temperaturveränderungen, unterliegen die feuerfesten Steine des Mauerwerks einer Wärmeausdehnung. Diese Wärmeausdehnung der feuerfesten Steine und des aus diesen gebildeten Mauerwerks ist bei der Erstellung des Mauerwerks jedoch zu berücksichtigen. Insoweit ist es bekannt, die feuerfesten Steine des Mauerwerks bei dessen Errichtung derart über die Haltemittel zu fixieren, dass Dehnungsfugen zwischen den feuerfesten Steinen verbleiben. Beim Aufheizen des metallurgischen Ofens und der damit einhergehenden Wärmeausdehnung der feuerfesten Steine werden diese Fugen allmählich geschlossen, so dass die feuerfesten Steine bei Erreichen der Betriebstemperatur des metallurgischen Ofens ein fugenloses Mauerwerk bilden.

Grundsätzlich haben sich metallurgische Öfen mit einer solchen Ofenwandung in der Praxis zwar bewährt. Allerdings kann es insbesondere während des Aufheizens des Ofens dazu kommen, dass durch die noch nicht geschlossenen Fugen des Mauerwerks Metallschmelze in und durch das Mauerwerk fließt. Hierdurch kann die Ofenwandung und insbesondere das Kühlelement der Ofenwandung jedoch beschädigt werden.

EP 2 851 640 A1 offenbart eine feuerfeste keramische Ausmauerung, bei der feuerfeste Steine unmittelbar benachbart zu einer metallischen Kühlplatte angeordnet werden, wobei die Steine zum einen eine der Kühlplatte zugewandte Oberfläche aufweisen, die mit der Kühlplatte einen Winkel einschließt und die Steine ferner vertikal verlaufende Löcher aufweisen, die in übereinander angeordneten Lagen der Steine miteinander fluchten, wobei Stangen durch die miteinander fluchtenden Löcher geführt sind, so dass die Steine entlang der Stangen vertikal beweglich sind.

US 2,107,524 A offenbart eine Kesselanlage, bei der als Außenwand ein doppelwandiges Mauerwerk vorgesehen ist, wobei zwischen dem inneren Mauerwerk und dem äußeren Mauerwerk ein durchlüftbarer Spalt verbleibt und zur Gewährleistung der Standsicherheit des Mauerwerks ein Stahlträger vorgesehen ist, über den das äußere Mauerwerk mittels am Stahlträger befestigter Haken an Metallelementen, die an einem vertikal verlaufenden Stahlträger angeordnet sind, befestigt ist.

US 2,281,951 A offenbart eine Ofenwand, bei der ein Mauerwerk auf feuerfesten Steinen unmittelbar benachbart zu Dämmplatten angeordnet ist, wobei die Dämmplatten nach außen wiederrum durch Metallplatten abgedeckt sind und wobei das Mauerwerk derart errichtet ist, dass die feuerfesten Steine von außen erreichbar sind, um einzelne Steine des Mauerwerks aus diesem entfernen und durch neue Steine ersetzen zu können.

Der Erfindung liegt die Aufgabe zugrunde, einen metallurgischen Ofen, insbesondere einen metallurgischen Ofen zur Aufnahme einer Metallschmelze, zur Verfügung zu stellen, bei dem die das Mauerwerk der Ofenwandung bildenden, feuerfesten Steine zwar im Mauerwerk gehalten werden, gleichzeitig jedoch auch bei einer Wärmeausdehnung der feuerfesten Steine stets ein fugenloses Mauerwerk aus diesen feuerfesten Steinen ausgebildet werden kann.

Zur Lösung dieser Aufgabe wird erfindungsgemäß zur Verfügung gestellt ein metallurgischer Ofen, der die folgenden Merkmale umfasst:
Eine Ofenwandung, die einen Ofenraum umschließt;
die Ofenwandung umfasst wenigstens ein Kühlelement, wobei das Kühlelement die folgenden Merkmale umfasst:
   ein Metallelement, das eine dem Ofenraum zugewandte Seite umfasst;
   ein Mauerwerk, das gegenüber der dem Ofenraum zugewandten Seite des Metallelementes und mit Abstand zu dieser Seite des Metallelementes angeordnet ist;
   das Mauerwerk umfasst feuerfeste Steine, die in mehreren Lagen übereinander angeordnet sind;
   Metallschienen, die durch das Mauerwerk verlaufen;
   Führungsmittel, über die die Metallschienen vertikal führbar an dem Metallelement befestigt sind.

Der erfindungsgemäße metallurgische Ofen umfasst demnach, wie aus dem Stand der Technik bekannt, eine Ofenwandung, die einen Ofenraum umschließt, wobei die Ofenwandung ein Kühlelement umfasst, das ein Metallelement und ein mit Abstand hierzu angeordnetes Mauerwerk umfasst. Der erfindungsgemäße metallurgische Ofen zeichnet sich erfindungsgemäß nunmehr jedoch insoweit über die aus dem Stand der Technik bekannten metallurgischen Öfen dadurch aus, als der erfindungsgemäße metallurgische Ofen Metallschienen umfasst, die durch das Mauerwerk verlaufen, wobei die Metallschienen über Führungsmittel vertikal führbar an dem Metallelement befestigt sind.

Über die durch das Mauerwerk hindurch verlaufenden Metallschienen, die über die Führungsmittel an dem Metallelement befestigt sind, sind die das Mauerwerk bildenden, feuerfesten Steine im Mauerwerk fixiert, also im Mauerwerk befestigt, so dass ein Lösen oder gar Herausfallen der feuerfesten Steine aus dem Mauerwerk verhindert werden kann. Besonders vorteilhaft ist dabei, dass die feuerfesten Steine in der Ofenwandung des erfindungsgemäßen Ofens allein über die Metallschienen im Mauerwerk befestigt sind, also keine weiteren Befestigungsmittel benötigt werden, um die feuerfesten Steine im Mauerwerk zu halten.

Indem die Metallschienen jedoch gleichzeitig vertikal führbar über die Führungsmittel an dem Metallelement befestigt sind, ist gleichzeitig eine vertikale Bewegbarkeit der Metallschienen und damit auch der feuerfesten Steine des Mauerwerks möglich. Bei einer sich aufgrund einer Temperaturveränderung der feuerfesten Steine ergebenden Wärmeausdehnung der feuerfesten Steine können diese stets ein fugenloses Mauerwerk ausbilden und gleichzeitig durch die metallschienen im Mauerwerk gehaltert werden.

Insoweit können die vertikal führbar an dem Metallelement befestigten Führungsmittel vielmehr der Wärmeausdehnung der feuerfesten Steine in vertikaler Richtung "folgen".

Hierdurch ist auch bei einer Temperaturveränderung der feuerfesten Steine stets ein fugenloses Mauerwerk ausbildbar, so dass bei dem erfindungsgemäßen metallurgischen Ofen auch bei Temperaturveränderung ein Eindringen von Metallschmelze in und durch das Mauerwerk verhindert werden kann.

Das Mauerwerk umfasst feuerfeste Steine, die in mehreren Lagen übereinander angeordnet sind. Jede Lage besteht bevorzugt aus mehreren feuerfesten Steine, die nebeneinander, also in einer horizontalen Richtung nebeneinander, angeordnet sind.

Bevorzugt sind die feuerfesten Steine im Wesentlichen quaderförmig ausgebildet, wobei die feuerfesten Steine bevorzugt jeweils die gleichen Maße aufweisen. Dies ermöglicht es in besonders einfacher Art und Weise, aus den feuerfesten Steine ein Mauerwerk aus mehreren übereinander angeordneten Lagen auszubilden.

Erfindungsgemäß wurde festgestellt, dass sich aufgrund eines starken Temperaturgradienten im Mauerwerk Spannungen in diesem aufbauen können, die zu Spannungsrissen in den feuerfesten Steinen führen können, wenn das Mauerwerk eine Tiefe (also eine Erstreckung von der dem Ofenraum zugewandten Seite zu der dem Metallelement zugewandten Seite des Mauerwerks) von mehr als 500 mm aufweist. Ferner wurde festgestellt, dass das Mauerwerk unzureichend isolieren kann, wenn dieses eine Tiefe unter 200 mm aufweist. Insofern weisen die feuerfesten Steine beziehungsweise das Mauerwerk bevorzugt eine Tiefe im Bereich von 200 mm bis 500 mm auf.

Die feuerfesten Steine können grundsätzlich aus einem beliebigen Werkstoff bestehen, der für feuerfeste Steine in gattungsgemäßen metallurgischen Öfen bekannt ist. Bevorzugt sind die Steine aus einem keramischen feuerfesten Werkstoff ausgebildet, besonders bevorzugt aus einem gesinterten keramischen feuerfesten Werkstoff. Beispielsweise können die Steine in Form von Magnesia-Chromit-Steinen oder in Form von Tonerde-Chromit-Steinen vorliegen.

Nach einer besonders bevorzugten Ausführungsform sind die feuerfesten Steine entlang der Metallschienen verschieblich beziehungsweise beweglich. Dies hat den besonderen Vorteil, dass das Mauerwerk, insbesondere auch besonders gut, soweit das Mauerwerk in Form eines wie nachfolgend ausgeführten, mörtellosen Mauerwerks vorliegt, noch flexibler auf Wärmedehnungen der feuerfesten Steine reagieren kann.

Besonders bevorzugt ist das Mauerwerk aus den feuerfesten Steine mörtellos, also ohne Mörtel an den zwischen benachbarten feuerfesten Steinen einander zugewandten Oberflächen, ausgebildet. Besonders bevorzugt liegen benachbarte feuerfeste Steine im Mauerwerk dabei fugenlos, also mit ihren einander zugewandten Oberflächen jeweils unmittelbar gegeneinander an. Insoweit kann es sich bei dem Mauerwerk um ein mörtelloses Trockenmauerwerk aus den feuerfesten Steinen handeln.

Ein besonderer Vorteil eines solchen, ohne Mörtel aus den feuerfesten Steinen errichteten Mauerwerks besteht darin, dass das Mauerwerk sehr flexibel auf eine Wärmeausdehnung der feuerfesten Steine reagieren kann und die feuerfesten Steine - neben ihrer vertikalen Bewegbarkeit durch die vertikal geführten Metallschienen - hinsichtlich ihrer Bewegbarkeit auch weitere Freiheitsgrade, insbesondere in horizontaler Richtung beziehungsweise entlang der Metallschienen aufweisen.

Die durch das Mauerwerk verlaufenden Metallschienen verlaufen bevorzugt gerade, also entlang einer linearen Längsachse. Dies hat insbesondere den besonderen Vorteil, dass die feuerfesten Steine des Mauerwerks entlang der Metallschienen besonders einfach bewegbar beziehungsweise verschiebbar angeordnet werden können, so dass sie sich im Falle einer Wärmeausdehnung entlang der Metallschienen bewegen beziehungsweise ausdehnen können.

Bevorzugt verlaufen die Metallschienen entlang der dem Ofenraum zugewandten Seite des Metallelementes, bevorzugt in gleichbleibendem Abstand zum Metallelement. Dies hat insbesondere auch den Vorteil, dass der Abstand zwischen Metallelement und Mauerwerk auch bei einer Horizontalbewegung der feuerfesten Steine des Mauerwerks stets gleich bleibt, wodurch, insbesondere auch soweit ein Dichtmittel zur Verbesserung der thermischen Leitfähigkeit zwischen dem Mauerwerk und dem Metallelement angeordnet ist, stets ein guter thermischer Kontakt zwischen dem Mauerwerk und dem Metallelement hergestellt werden kann.

Besonders bevorzugt verlaufen die Metallschienen horizontal. Dies hat insbesondere den Vorteil, dass die feuerfesten Steine des Mauerwerkes auch bei einer Horizontalbewegung entlang der Metallschienen stets sicher an den Metallschienen gehaltert sind und beispielsweise ein Herabgleiten der feuerfesten Steine bei deren Verschiebung entlang der Metallschienen verhindert werden kann.

Bevorzugt bestehen die Metallschienen aus einem gut wärmeleitenden Metall, wie Stahl oder Kupfer. Besonders bevorzugt bestehen die Metallschienen aus Stahl; zwar hat Stahl eine geringere Wärmeleitfähigkeit als Kupfer, aufgrund der gegenüber Kupfer höheren Festigkeit hat sich Stahl jedoch als vorteilhafter erwiesen.

Bevorzugt verlaufen die Metallschienen parallel und mit Abstand zueinander.

Nach einer besonders bevorzugten Ausführungsform verlaufen die Metallschienen in Nuten, die in den feuerfesten Steinen des Mauerwerks ausgebildet sind, durch das Mauerwerk. Dies hat insbesondere auch den

Vorteil, dass die Metallschienen besonders einfach im Mauerwerk angeordnet werden können. Beispielsweise hat dies auch den Vorteil, dass ein einzelner feuerfester Stein aus dem Mauerwerk entnehmbar ist, ohne hierfür eine ganze Lage an feuerfesten Steinen oder gar das gesamte Mauerwerk aus den Metallschienen entnehmen zu müssen.

Bevorzugt verlaufen die Nuten mit Abstand zu den beiden Seiten des Mauerwerks, die dem Metallelement beziehungsweise dem Ofenraum zugewandt sind, durch das Mauerwerk beziehungsweise durch die feuerfesten Steine. Die Nuten verlaufen damit "im Inneren" des Mauerwerks durch dieses hindurch. Entsprechend verlaufen auch die durch diese Nuten verlaufenden Metallschienen "im Inneren" durch das Mauerwerk hindurch. Zum einen hat dies den Vorteil, dass die feuerfesten Steine hierdurch besonders sicher gegen ein Herausfallen aus dem Mauerwerk gesichert sind. Zum anderen hat dies jedoch insbesondere auch den Vorteil, dass Wärme hierdurch besonders gut von den feuerfesten Steinen auf die Metallschienen übertragen und von diesen aus den feuerfesten Steinen nach Außen abgeleitet beziehungsweise auf das Metallelement übertragen werden kann.

Erfindungsgemäß wurde festgestellt, dass eine besonders gute Wärmeableitung von den feuerfesten Steinen auf die Metallschienen erreicht werden kann, wenn die Metallschienen in Bereichen durch das Mauerwerk verlaufen, die wenigstens 30 mm von der dem Metallelement zugewandte Seite des Mauerwerks beziehungsweise der feuerfesten Steine beabstandet sind. Ferner wurde festgestellt, dass die Statik des Mauerwerks negativ beeinträchtigt werden kann, wenn die Metallschienen in Bereichen durch das Mauerwerk verlaufen, die mehr als 50 % der Tiefe des Mauerwerks (wiederum betrachtet von der dem Metallelement zugewandte Seite des Mauerwerks) betragen. Bevorzugt kann daher vorgesehen sein, dass die Metallschienen in Bereichen durch das Mauerwerk verlaufen, die wenigstens 30 mm von der dem Metallelement zugewandte Seite des Mauerwerks beziehungsweise der feuerfesten Steine beabstandet sind, wobei ferner vorgesehen sein kann, dass die Metallschienen nicht in Bereichen durch das Mauerwerk verlaufen, die mehr als 50 % der Tiefe des Mauerwerks betragen. Nach einer bevorzugten Ausführungsform kann vorgesehen sein, dass die Metallschienen in Bereichen durch das Mauerwerk verlaufen, die wenigstens 30 mm, maximal jedoch 100 mm von der dem Metallelement zugewandte Seite des Mauerwerks beziehungsweise der feuerfesten Steine beabstandet sind.

Nach einer besonders bevorzugten Ausführungsform sind die Nuten, in denen die Metallschienen verlaufen, auf der Unterseite der feuerfesten Steine, auf der Oberseite der feuerfesten Steine oder sowohl auf der Unterseite als auch auf der Oberseite der feuerfesten Steine des Mauerwerks ausgebildet.

Bevorzugt ist vorgesehen, dass die Kontur der Nuten der feuerfesten Steine, durch die die Metallschienen verlaufen, an die Kontur der Metallschienen angepasst ist, so dass die Metallschienen ohne oder nur mit geringem Spiel durch die Nuten verlaufen. Dies hat insbesondere den Vorteil, dass die feuerfesten Steine sicher durch die Metallschienen fixierbar sind und, insbesondere soweit ein geringes Spiel vorhanden ist, einfach entlang der Metallschienen verschiebbar angeordnet sind. Soweit Nuten sowohl auf der Unterseite als auch auf der Oberseite der feuerfesten Steine des Mauerwerks ausgebildet sind, können diese gemeinsam eine Kontur bilden, die an die Kontur der Metallschienen angepasst ist.

Solche Nuten zur Aufnahme der Metallschienen haben unter anderem den Vorteil, dass das Mauerwerk besonders einfach herstellbar ist. Insoweit kann zur Herstellung des Mauerwerks eine erste Lage an feuerfesten Steinen nebeneinander angeordnet werden. Soweit die feuerfesten Steine dieser ersten Lage auf ihrer Oberseite eine Nut aufweisen, werden diese Nuten miteinander fluchtend ausgerichtet. Anschließend wird eine Metallschiene auf diese erste Lage an feuerfesten Steinen aufgelegt, wobei die Metallschiene gleichzeitig, soweit als Führungsmittel eine Schienenführung vorgesehen ist, in die Schienen der Schienenführung eingeführt werden können. Soweit die feuerfesten Steine der ersten Lage auf ihrer Oberseite eine Nut aufweisen, wird die Metallschiene gleichzeitig in die miteinander fluchtend ausgerichteten Nuten eingelegt. Anschließend wird eine weitere, zweite Lage an feuerfesten Steinen auf der ersten Lage der feuerfesten Steine angeordnet. Soweit die feuerfesten Steine dieser zweiten Lage auf ihrer Unterseite eine Nut aufweisen, werden diese feuerfesten Steine der zweiten Lage derart auf die erste Lage der feuerfesten Steine aufgelegt, dass die Nuten der zweiten Lage der feuerfesten Steine miteinander fluchten und die Metallschiene durch die Nuten der ersten und zweiten Lage der feuerfesten Steine verläuft. Auf der zweiten Lage können entsprechend weitere Lagen an feuerfesten Steinen und Metallschienen angeordnet werden.

Bevorzugt sind die feuerfesten Steine in jeweils einer Lage derart angeordnet, dass die Oberseiten und Unterseiten der feuerfesten Steine in dieser Lage jeweils in einer Ebene liegen. Die in den feuerfesten Steinen jeweils einer Lage ausgebildeten Nuten sind bevorzugt miteinander fluchtend, also entlang einer Längsachse ausgerichtet. Dies macht es besonders einfach möglich, dass eine Metallschiene durch diese miteinander fluchtenden Nuten und damit durch das Mauerwerk verläuft.

Auf einer Seite ist das Mauerwerk dem Ofenraum zugewandt. Auf dieser Seite, die die Heißseite der feuerfesten Steine des Mauerwerks bildet, stehen die feuerfesten Steine in Kontakt mit einer im Ofenraum befindlichen Metallschmelze.

Auf der gegenüberliegenden Seite, die die Kaltseite der feuerfesten Steine des Mauerwerks bildet, ist das Mauerwerk dem Metallelement zugewandt. Dieser Seite des Mauerwerks ist die dem Ofenraum zugewandten Seite des Metallelementes zugewandt.

Gegenüber der dem Ofenraum zugewandten Seite des Metallelementes und mit Abstand zu dieser Seite des Metallelementes ist das Mauerwerk des Kühlelementes angeordnet. Indem das Mauerwerk mit Abstand zum Metallelement angeordnet ist, sind die feuerfesten Steine des Mauerwerkes gegenüber dem Metallelement beweglich, so dass eine Wärmeausdehnung der feuerfesten Steine durch das Metallelement nicht gehemmt wird. Ferner schafft dieser Abstand zwischen Metallelement und Mauerwerk die Möglichkeit, den durch diesen Abstand ausgebildete Spalt mit einem Dichtmittel zu füllen, wodurch die Wärmeleitung zwischen Mauerwerk und Metallelement weiter verbessert werden kann.

Nach einer bevorzugten Ausführungsform ist vorgesehen, dass in dem zwischen dem Mauerwerk und der dem Ofenraum zugewandten Seite des Metallelementes ausgebildeten Spalt ein Dichtmittel angeordnet ist. Bei diesem Dichtmittel handelt es sich bevorzugt um eine thermisch gut leitfähige Masse, beispielsweise eine Masse, die freien Kohlenstoff umfasst, insbesondere eine Graphit umfassende Masse. Nach einer Ausführungsform handelt es sich bei dem Dichtmittel um eine Hinterfüllmasse, wie sie aus der Feuerfesttechnologie bekannt ist. Durch diese Dichtmittel kann die thermische Leitfähigkeit zwischen dem Mauerwerk und dem Metallelement verbessert werden, so dass Wärme besonders gut vom Mauerwerk über das Dichtmittel an das Metallelement leitbar ist. Besonders bevorzugt handelt es sich bei dem Dichtmittel um eine plastisch verformbare Masse, also um eine Masse, die zumindest bei deren Einfüllung in den Spalt plastisch verformbare Eigenschaften aufweist. Insbesondere handelt es sich bei dem Dichtmittel um eine plastisch verformbare, Graphit umfassende Masse. Eine solche Masse hat insbesondere den Vorteil, dass sich das Dichtmittel an die Oberflächenkontur des Spaltes anschmiegt, so dass eine besonders gute thermische Leitfähigkeit zwischen dem Mauerwerk und dem Metallelement hergestellt werden kann. Besonders bevorzugt handelt es sich bei eine wie vorstehend ausgeführten Masse und eine solche Masse, die dauerhaft, insbesondere auch bei Beaufschlagung mit Temperatur beim betrieblichen Einsatz des erfindungsgemäßen Ofens, ihre plastischen Eigenschaften beibehält, so dass sich die Masse auch beim Betrieb des Ofens an die Oberflächenkontur des Spaltes anschmiegt und eine besonders gute thermische Leitfähigkeit zwischen dem Mauerwerk und dem Metallelement herstellt.

Nach einer Ausführungsform ist vorgesehen, dass die Metallschienen Abschnitte aufweisen, die über die Seite des Mauerwerkes hinausragen, die der Seite des Metallelementes zugewandt ist, die dem Ofenraum zugewandt ist. Mit anderen Worten weisen die Metallschienen Abschnitte auf, die über das Mauerwerk hinaus in Richtung auf das Metallelement ragen. Insbesondere soweit in dem zwischen Mauerwerk und Metallelement ausgebildeten Spalt ein wie vorstehend ausgebildetes Dichtmittel angeordnet ist, können diese Abschnitte der Metallschienen in den Spalt und damit in das Dichtmittel hineinragen. Insoweit kann durch diese Abschnitte der Metallschienen die Wärmeleitung vom Mauerwerk in das Dichtmittel und damit auch an das Metallelement verbessert werden. Bevorzugt ragen die über das Mauerwerk hinausragenden Abschnitte über eine Länge von wenigstens 5 mm, noch bevorzugter von wenigstens 10 mm über das Mauerwerk hinaus, da hierdurch eine besonders gute Wärmeableitung vom Mauerwerk in das Dichtmittel erreicht werden kann. Ferner kann vorgesehen sein, dass diese Abschnitte über eine Länge von höchstens 50 mm über das Mauerwerk hinausragen. Nach einer bevorzugten Ausführungsform ist vorgesehen, dass sich diese Abschnitte der Metallschienen entlang der überwiegenden Länge des Mauerwerks (also der horizontalen Erstreckung des Mauerwerks entlang des Metallelementes) erstrecken. Nach einer Ausführungsform ist vorgesehen, dass sich diese Abschnitte der Metallschienen entlang der gesamten Länge des Mauerwerks erstrecken. Indem sich diese Abschnitte der Metallschienen entlang der überwiegenden oder vollständigen Länge des Mauerwerks erstrecken, kann Wärme über die überwiegende oder vollständige Länge des Mauerwerks hinweg gut vom Mauerwerk abgeführt und insbesondere beispielsweise in das Dichtmittel abgegeben werden.

Nach einer Ausführungsform ist vorgesehen, dass die Metallschienen einen ersten Abschnitt aufweisen, der im Wesentlichen stangenförmig und bevorzugt mit einem runden oder ovalen Querschnitt ausgebildet ist. Dieser erste Abschnitt verläuft bevorzugt durch das Mauerwerk, liegt also beispielsweise, wie oben ausgeführt, in den Nuten der feuerfesten Steine des Mauerwerks ein. Bevorzugt weist dieser erste Abschnitt einen maximalen Durchmesser des runden oder ovalen Querschnitts im Bereich von 15 bis 50 mm auf, da bei einem solchen Durchmesser eine gute Halterung der feuerfesten Steine im Mauerwerk erreicht werden kann, ohne die Festigkeit der feuerfesten Steine zu beeinträchtigen. Nach einer Ausführungsform ist vorgesehen, dass sich an diesen ersten Abschnitt der Metallschienen ein zweiter Abschnitt anschließt. Bei diesem zweiten Abschnitt der Metallschienen kann es sich um den oben beschriebenen Abschnitt der Metallschienen handeln, der über die Seite des Mauerwerkes hinausragt, die der Seite des Metallelementes zugewandt ist. Dieser zweite Abschnitt kann bevorzugt eine im Wesentlichen plattenförmige Gestalt aufweisen. Eine solch plattenförmige Gestalt dieses zweiten Abschnitts hat insbesondere den Vorteil, dass dieser mit einer großen Oberfläche an den feuerfesten Steinen des Mauerwerks anliegen und Wärme daher gut von den feuerfesten Steinen auf diesen zweiten Abschnitt der Metallschienen übertragen und an das Dichtmittel beziehungsweise das Metallelement weitergeleitet werden kann.

Als Führungsmittel, über die die Metallschienen vertikal führbar an dem Metallelement befestigt sind, können grundsätzlich beliebige Führungsmittel eingesetzt werden, die im Maschinenbau dazu verwendet werden, ein erstes Element führbar, insbesondere linear führbar, an einem zweiten Element zu befestigen.

Gemäß einer besonders bevorzugten Ausführungsform ist erfindungsgemäß vorgesehen, dass die Führungsmittel als Schienenführung ausgebildet sind. Mittels einer solchen Schienenführung können die Metallschienen besonders einfach und sicher vertikal führbar an den Metallelementen befestigt werden. Insbesondere hat eine Schienenführung auch den Vorteil, dass diese zwar einfach und dennoch robust gestaltet sein kann, so dass die Metallschienen auch bei hohen Temperaturen sicher vertikal führbar an den Metallelementen befestigt sind. Nach einer Ausführungsform ist vorgesehen, dass als Schienenführung ausgebildete Führungsmittel Führungsschienen umfassen, an denen die Metallschienen vertikal führbar angeordnet sind. Besonders bevorzugt sind diese Führungsschienen an der dem Ofenraum zugewandten Seite des Metallelementes angeordnet. Zur Befestigung und vertikalen Führung der Metallschienen an diesen Führungsschienen können die Metallschienen Abschnitte aufweisen, die derart mit den Führungsschienen zusammenwirken, dass diese Abschnitte der Metallschienen mit den Führungsschienen eine Schienenführung ausbilden, mittels derer die Metallschienen vertikal führbar an dem Metallelement befestigt sind. Beispielsweise können die Führungsschienen als hinterschnittene Nut ausgebildet sein, wobei die Metallschienen einen Abschnitt aufweisen, der derart in dieser Nut einliegt, dass die Metallschienen über diesen Abschnitt vertikal führbar an den Führungsschienen befestigt sind. Im Sinne einer kinematischen Umkehr dieser Ausführungsform können die Führungsschienen beispielsweise auch in einer hinterschnittenen Aussparung der Metallschienen einliegen. Die Führungsschienen sind bevorzugt aus Stahl gefertigt.

Zur Anordnung der Führungsschienen an dem Metallelement können die Führungsschienen beispielsweise mit dem Metallelement verschweißt, vernietet oder - besonders bevorzugt - verschraubt sein.

Das Metallelement ist, insbesondere wie aus dem Stand der Technik bekannt, bevorzugt platten- beziehungsweise tafelförmig gestaltet. Bevorzugt besteht das Metallelement aus einem thermisch gut leitfähigen Metall, bevorzugt aus Kupfer. Besonders bevorzugt sind in dem Metallelement Leitungen zum Durchleiten eines Kühlfluides durch das Metallelement, insbesondere eines Kühlfluides in Form von Wasser, ausgebildet.

Die dem Ofenraum und damit auch dem Mauerwerk zugewandte Seite des Metallelementes ist bevorzugt eben ausgebildet.

Das Kühlelement ist, insbesondere wie aus dem Stand der Technik bekannt, Bestandteil der Ofenwandung des erfindungsgemäßen metallurgischen Ofens. Bevorzugt umfasst die Ofenwandung mehrere solcher Kühlelemente. Neben den Kühlelementen kann die Ofenwandung insbesondere auch weitere Abschnitte umfassen, die nicht als Kühlelement ausgebildet sind.

Der durch die Ofenwandung umschlossene Ofenraum ist bevorzugt zur Aufnahme einer Metallschmelze ausgebildet.

Grundsätzlich kann es sich bei dem erfindungsgemäßen metallurgischen Ofen um einen beliebigen metallurgischen Ofen handeln, insbesondere einen Ofen zur Aufnahme einer Metallschmelze, also beispielsweise um einen Hochofen oder um einen Elektroofen. Besonders bevorzugt handelt es sich bei dem erfindungsgemäßen metallurgischen Ofen um einen Ofen, der zur Gewinnung von Kupfer nach dem Schwebeschmelzverfahren (englisch: "Flash Smelting") ausgebildet ist.

Weitere Merkmale der Erfindung ergeben sich aus den Ansprüchen, den Figuren sowie der zugehörigen, nachfolgenden Figurenbeschreibung.

Sämtliche Merkmale des erfindungsgemäßen Ofens können, einzeln oder in Kombination, beliebig miteinander kombiniert sein.

Ausführungsbeispiele einer Ofenwandung eines erfindungsgemäßen metallurgischen Ofens sind in den beigefügten Figuren dargestellt und in der zugehörigen, nachfolgenden Figurenbeschreibung näher erläutert.

Dabei zeigt
- Figur 1: ein Ausführungsbeispiel eines erfindungsgemäßen Ofens in einer seitlichen Schnittansicht;
- Figur 2: eine perspektivische Ansicht von schräg oben auf ein Kühlelement der Ofenwandung des Ofens gemäß Figur 1;
- Figur 3: das Kühlelement gemäß Figur 2 in einer Frontalansicht auf das Mauerwerk des Kühlelementes vom Ofenraum aus betrachtet;
- Figur 4: das Kühlelement gemäß Figur 2 in einer Ansicht von oben;
- Figur 5: das Kühlelement gemäß Figur 2 in einer Ansicht von der Seite;
- Figur 6: einen Ausschnitt der Darstellung gemäß Figur 5;
- Figur 7: das Metallelement des Kühlelementes gemäß Figur 2 in einer perspektivischen Ansicht von schräg oben;
- Figur 8: das Metallelement des Kühlelementes gemäß Figur 2 in einer Frontalansicht vom Mauerwerk aus betrachtet;
- Figur 9: das Metallelement des Kühlelementes gemäß Figur 2 in einer Ansicht von oben;
- Figur 10: eine Metallschiene des Kühlelementes gemäß Figur 2 in einer perspektivischen Ansicht von schräg oben;
- Figur 11: eine alternative Ausführungsform einer Metallschiene in einer perspektivischen Ansicht von schräg oben;
- Figur 12: eine alternative Ausführungsform eines Metallelementes in einer perspektivischen Ansicht von schräg oben;
- Figur 13: das Metallelement gemäß Figur 12 in einer Frontalansicht;
- Figur 14: das Metallelement gemäß Figur 12 in einer Ansicht von oben;
- Figur 15: eine weitere alternative Ausführungsform eines Metallelementes in einer Frontalansicht;
- Figur 16: das Metallelement gemäß Figur 15 in einer Ansicht von oben; und
- Figur 17: eine weitere alternative Ausführungsform einer Metallschiene in einer perspektivischen Ansicht von schräg oben.

In den Figuren sind gleiche oder gleichwirkende Elemente teilweise mit den gleichen Bezugszeichen versehen.

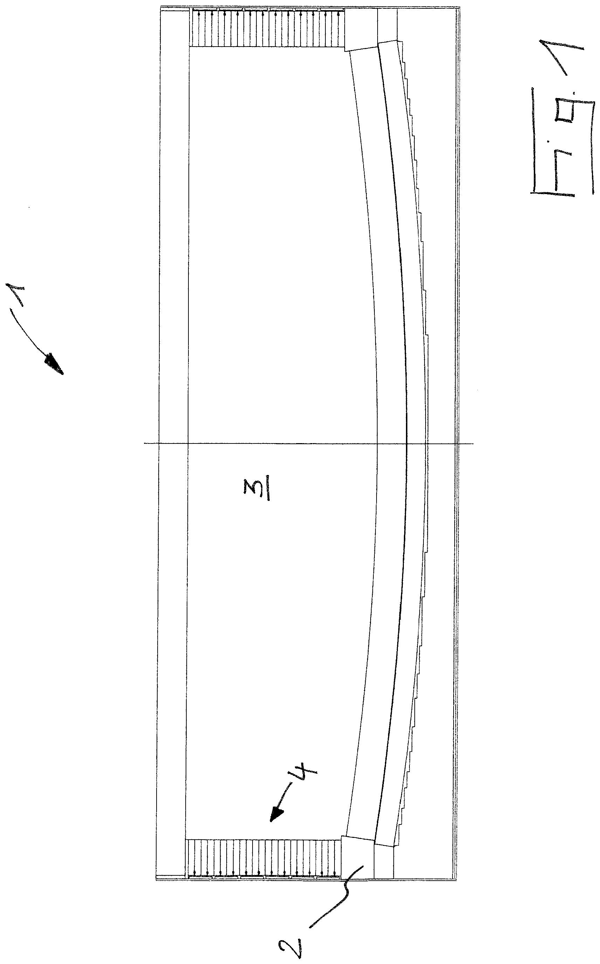

Bei dem in Figur 1 in seiner Gesamtheit mit dem Bezugszeichen 1 gekennzeichneten metallurgischen Ofen handelt es sich um einen zur Gewinnung von Kupfer nach dem Schwebeschmelzverfahren ("Flash Smelting") ausgebildeten Industrieofen. Der Ofen 1 umfasst eine Ofenwandung 2, die einen Ofenraum 3 umschließt. Der Ofenraum 3 ist zur Aufnahme einer Metallschmelze, im Ausführungsbeispiel einer Kupferschmelze, ausgebildet.

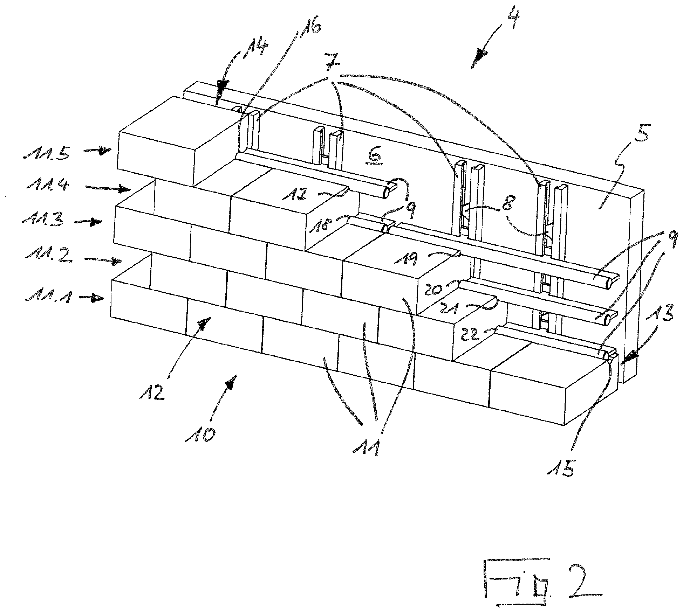

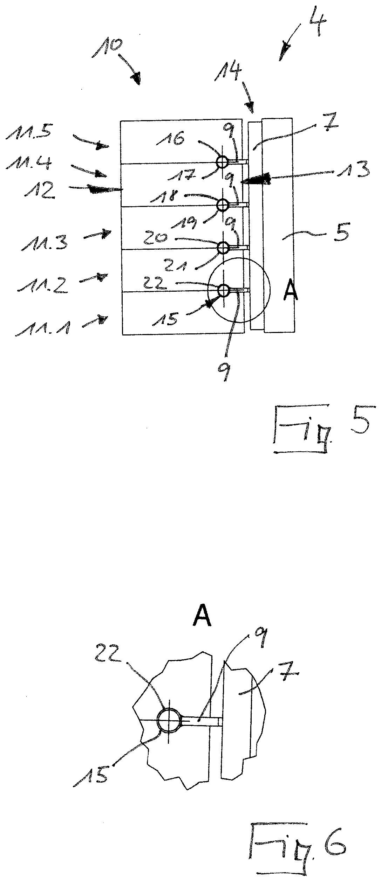

Die Ofenwandung 2 umfasst ein in den Figuren 2 bis 6 näher dargestelltes Kühlelement 4.

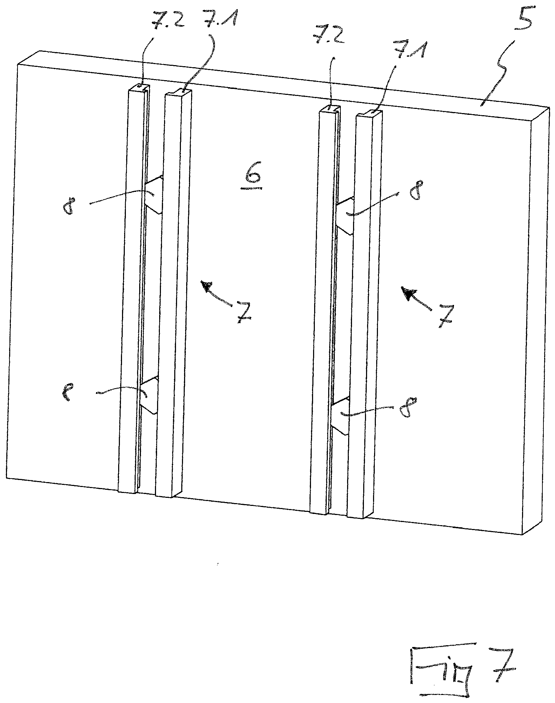

Das Kühlelement 4 umfasst ein Metallelement 5 in Form einer tafelförmigen Kupferplatte. Im Inneren des Metallelementes 5 sind Leitungen (nicht dargestellt) zum Durchleiten eines Kühlfluides in Form von Wasser durch das Metallelement 5 ausgebildet. Das Metallelement 5 weist eine dem Ofenraum 3 zugewandte, ebene Seite 6 auf. An dieser, dem Ofenraum 3 zugewandten Seite 6 des Metallelementes 5 sind mehrere, im Ausführungsbeispiel insgesamt vier, beabstandet zueinander angeordnete Führungsschienen 7 nebeneinander befestigt. Jede der vier Führungsschienen 7 umfasst, wie in Fig. 7 gut zu erkennen, jeweils zwei mit Abstand und parallel zueinander verlaufende Stahlprofile 7.1, 7.2, die sich vertikal entlang der dem Ofenraum 3 zugewandten Seite 6 des Metallelementes 5 erstrecken. Die Stahlprofile 7.1, 7.2 einer jeden Führungsschiene 7 weisen jeweils einen L-förmigen Querschnitt auf, wobei sich die Stahlprofile 7.1, 7.2 jeweils mit einem Abschnitt vom Metallelement 5 weg erstrecken und sich mit ihrem vom Metallelement 5 distalen Ende jeweils aufeinander zu erstrecken, so dass die Stahlprofile 7.1, 7.2 jeweils eine Führungsschiene 7 in Form einer hinterschnittenen Nut ausbilden. Im Ausführungsbeispiel des Kühlelementes 4 gemäß den Figuren 2 bis 6 sind die Stahlprofile 7.1, 7.2 einer jeden Führungsschiene jeweils durch zwei Schrauben 8 an das Metallelement 5 angeschraubt.

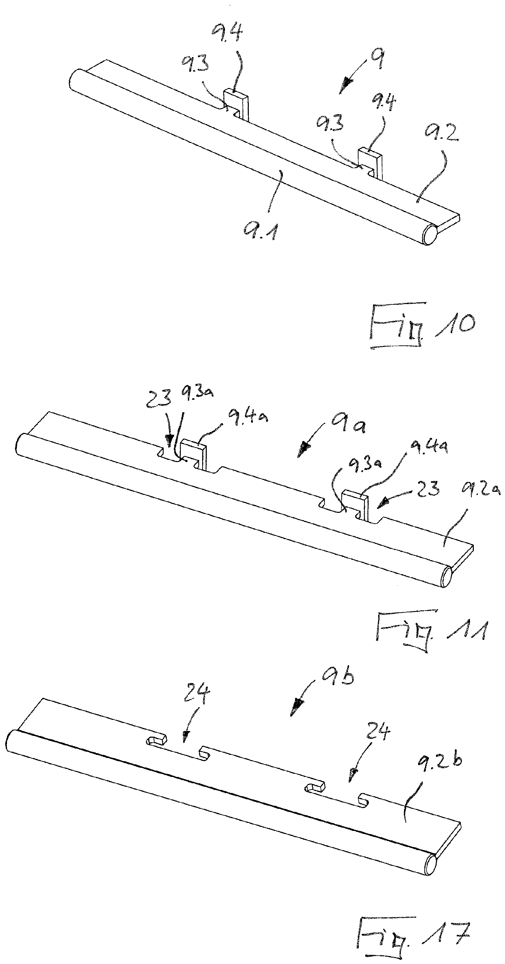

Die Führungsschienen 7 sind Bestandteil einer Schienenführung, durch die Metallschienen 9 des Kühlelementes 4 vertikal führbar an dem Metallelement 5 befestigt sind. Die Metallschienen 9 bestehen aus Stahl. Jede der Metallschienen 9 verläuft im Wesentlichen gerade, also jeweils entlang einer linearen Längsachse der jeweiligen Metallschiene 9. Jede Metallschiene 9 weist, wie Figur 10 näher zeigt, einen ersten, stangenförmigen Abschnitt 9.1 mit einem (senkrecht zur linearen Längsachse) runden Querschnitt (Durchmesser 30 mm) auf. An diesen ersten Abschnitt 9.1 schließt sich ein zweiter, plattenförmiger Abschnitt 9.2 an. Von diesem zweiten Abschnitt 9.2 stehen zwei beabstandete Stege 9.3 ab, an die endseitig jeweils ein tafelförmiges Elementes 9.4 angeschweißt ist. Die Stege 9.3 und tafelförmigen Elemente 9.4 sind derart dimensioniert, dass jeweils ein tafelförmiges Element 9.4 in die durch eine Führungsschiene 7 jeweils ausgebildete Nut einführbar und in dieser vertikal verschieblich ist. Dabei liegt jede Metallschiene 9 mit jeder ihren zwei tafelförmigen Elementen 9.4 jeweils in einer der durch die Führungsschienen 7 gebildeten Nuten ein, so dass die Metallschienen 9 hierdurch an dem Metallelement 5 befestigt und gleichzeitig vertikal an diesem führbar sind. Insoweit bilden die Metallschienen 9 zusammen mit den Führungsschienen 7 Führungsmittel in Form einer Schienenführung aus, durch die die Metallschienen 9 an dem Metallelement 5 befestigt und gleichzeitig vertikal an diesem führbar sind.

Im Ausführungsbeispiel gemäß den Figuren 2 bis 6 weist das Kühlelement 4 insgesamt acht Metallschienen 9 auf, wobei jeweils vier Metallschienen 9, die parallel zueinander und mit Abstand übereinander angeordnet sind, nebeneinander an jeweils zwei Führungsschienen 7 angeordnet sind.

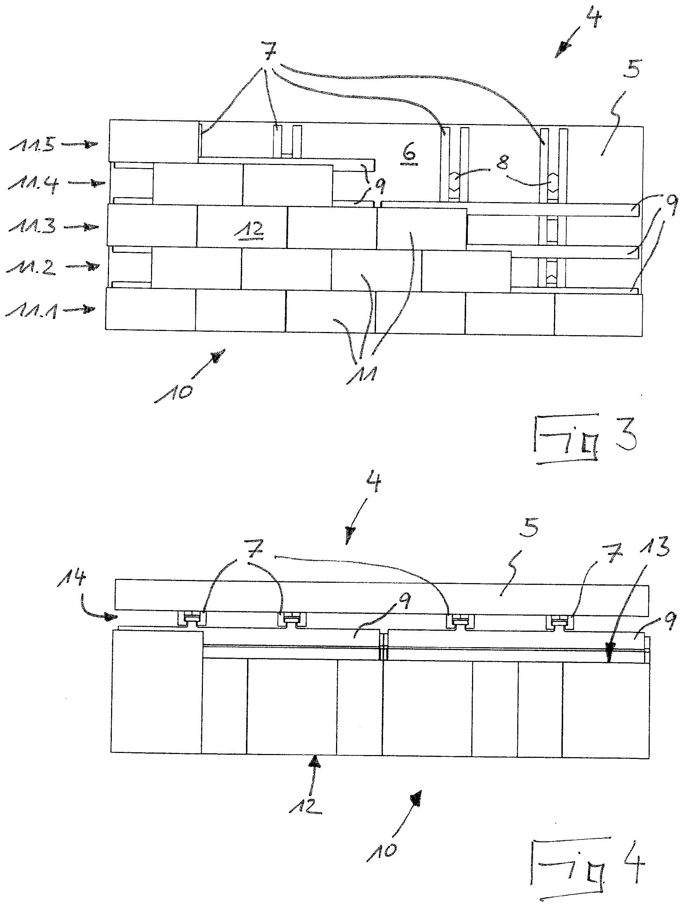

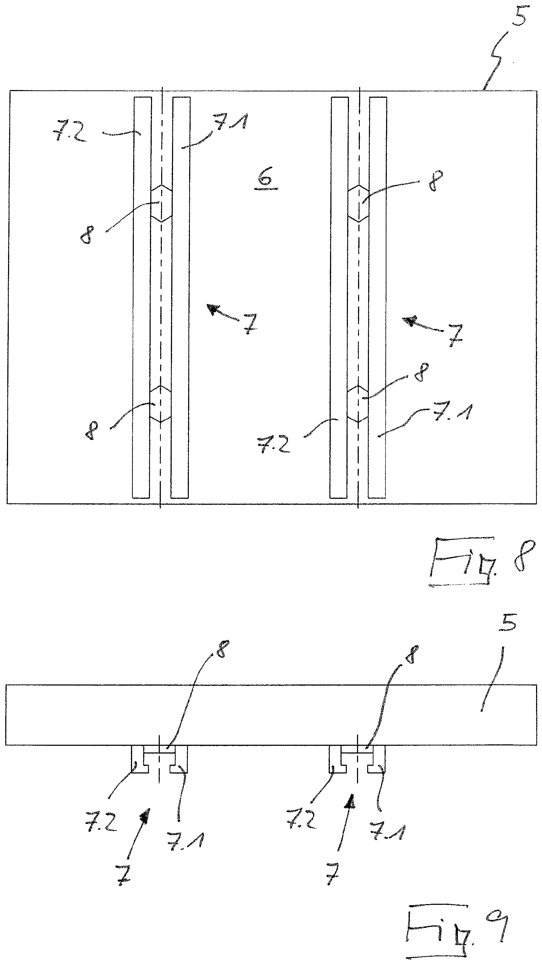

Der besseren Darstellung halber sind in den Figuren 2 und 3 von den rechten vier Metallschienen 9 nur drei Metallschienen 9 dargestellt, und zudem einige feuerfeste Steine 11 des Mauerwerks 10 nicht dargestellt. Ferner ist der besseren Darstellung halber in den Figuren 7 bis 9 nur der rechte Abschnitt des Metallelementes 5 mit den zwei daran befestigten Führungsschienen 7 dargestellt.

Die Metallschienen 9 verlaufen jeweils horizontal und mit gleichbleibenden Abstand zum Metallelement 5.

Mit Abstand zu der dem Ofenraum 3 zugewandten Seite 6 des Metallelementes 5 ist ein Mauerwerk 10 gegenüber dieser Seite 6 des Metallelementes 5 angeordnet. Das Mauerwerk 10 umfasst im Wesentlichen quaderförmige, feuerfeste Steine 11, die in fünf Lagen 11.1, 11.2, 11.3, 11.4, 11.5 übereinander zu dem Mauerwerk 10 angeordnet sind. Die Ober- und Unterseiten der feuerfesten Steine 11 einer jeden Lage 11.1, 11.2, 11.3, 11.4, 11.5 liegen jeweils in einer gemeinsamen Ebene, wobei benachbarte Lagen 11.1, 11.2, 11.3, 11.4, 11.5 - entlang der horizontalen Längserstreckung der Lagen 11.1, 11.2, 11.3, 11.4, 11.5 - jeweils um eine halbe Länge der feuerfesten Steine 11 versetzt zueinander ausgebildet sind.

Das Mauerwerk 10 weist eine dem Ofenraum 3 zugewandte Seite 12 und eine gegenüberliegende, dem Metallelement 5 zugewandte Seite 13 auf. Die Seiten 12, 13 des Mauerwerks 10 liegen jeweils in einer Ebene. Die dem Ofenraum 3 zugewandte Seite 12 steht beim Betrieb des Ofens 1 in Kontakt mit der im Ofenraum 3 befindlichen Metallschmelze.

Die Tiefe der feuerfesten Steine 11, also deren Erstreckung von der dem Ofenraum 3 zugewandte Seite 12 zu der dem Metallelement 5 zugewandte Seite 13 des Mauerwerks 10, beträgt 350 mm.

Die dem Metallelement 5 zugewandte Seite 13 des Mauerwerks 10 verläuft mit Abstand zu der dem Ofenraum 3 zugewandten Seite 6 des Metallelementes 5, so dass zwischen dem Mauerwerk 10 und dem Metallelement 5 ein Spalt 14 ausgebildet ist.

Die feuerfesten Steine 11 der untersten Lage 11.1 des Mauerwerks 10 weisen auf ihrer Oberseite jeweils eine Nut 15 auf. Die feuerfesten Steine 11 der obersten Lage 11.5 des Mauerwerks 10 weisen auf ihrer Unterseite jeweils eine Nut 16 auf. Die feuerfesten Steine 11 der zwischen diesen Lagen 11.1, 11.5 angeordneten Lagen 11.2, 11.3, 11.4 des Mauerwerks 10 weisen jeweils sowohl auf ihrer Ober- als auch auf ihrer Unterseite Nuten 17, 18, 19, 20, 21, 22 auf. Die Nuten 15, 16, 17, 18, 19, 20, 21, 22 sind derart ausgerichtet, dass die jeweils auf einer Oberseite beziehungsweise Unterseite ausgebildeten Nuten 15, 16, 17, 18, 19, 20, 21, 22 miteinander fluchten.

Die feuerfesten Steine 11 liegen in Form von Magnesia-Chromit-Steinen vor, also in Form von gesinterten keramischen Steinen auf Basis der Rohstoffe Magnesia und Chromerz.

Das Mauerwerk 10 ist ohne Mörtel und fugenlos errichtet. Insoweit liegen die einander zugewandten Oberflächen benachbarter feuerfeste Steine 11 jeweils unmittelbar gegeneinander an.

Durch die miteinander fluchtenden Nuten 15, 16, 17, 18, 19, 20, 21, 22 der feuerfesten Steine 11 des Mauerwerks 10 verlaufen die Metallschienen 9. Dabei bilden die Nuten 15, 16, 17, 18, 19, 20, 21, 22 auf gegeneinander anliegenden Unter- und Oberseiten der feuerfesten Steine 11 jeweils eine gemeinsame Kontur, die an die Kontur der durch die jeweilige Nut 15, 16, 17, 18, 19, 20, 21, 22 hindurchlaufende Metallschiene 9 angepasst ist. Im Ausführungsbeispiel weisen die Nuten 15, 16, 17, 18, 19, 20, 21, 22 jeweils eine Kontur mit einer Querschnittsfläche (also senkrecht zur Längsachse) in Form eines Halbkreises auf. Insoweit bilden im Ausführungsbeispiel die Nuten 16 und 17, die Nuten 18 und 19, die Nuten 20 und 21 sowie die Nuten 22 und 15 jeweils eine gemeinsame Kontur, die an die jeweilige Metallschiene 9 angepasst ist. Diese gemeinsame Kontur umfasst insbesondere auch eine im Wesentlichen stangenförmigen Kontur, die dem stangenförmigen Abschnitt 9.1 entspricht. Dabei verläuft die lineare Längsachse dieser gemeinsamen Kontur jeweils in einem Abstand von 50 mm von der dem Metallelement 5 zugewandte Seite des Mauerwerks 10 beziehungsweise der feuerfesten Steine 11 (so dass sich die Nuten 15, 16, 17, 18, 19, 20, 21, 22 aufgrund des Radius des kreisförmigen Querschnitts dieser gemeinsamen Kontur von 15 mm jeweils in einem Abstand von 35 bis 65 mm von der dem Metallelement 5 zugewandte Seite des Mauerwerks 10 beziehungsweise der feuerfesten Steine 11 erstrecken).

Die Metallschienen 9 liegen jeweils mit ihrem Abschnitt 9.1 in den Nuten 15, 16, 17, 18, 19, 20, 21, 22 ein und ragen mit ihrem Abschnitt 9.2 über das Mauerwerk 10 hinaus in Richtung auf das Metallelement 5 zu. Der Abschnitt 9.2 ragt über eine Länge von 15 mm über das Mauerwerk 10 hinaus.

Insoweit erfüllen die Metallschienen 9 gleichzeitig mehrere Funktionen. Zum einen sind die feuerfesten Steine 11 des Mauerwerks 10 durch die Metallschienen 9 am Metallelement 5 fixiert, wobei die feuerfesten Steine 11 gleichzeitig, wie unten weiter ausgeführt, horizontal und vertikal beweglich sind. Zum weiteren ermöglichen die Metallschienen 9 eine Wärmeableitung von den feuerfesten Steinen 11 auf das Metallelement 5.

Die feuerfesten Steine 11 sind entlang der Metallschienen 9 verschieblich, so dass insoweit eine horizontale Verschiebbarkeit der feuerfesten Steine im Mauerwerk 10 gegeben ist. Ferner sind die feuerfesten Steine 11 über die mittels der Führungsschienen 7 vertikal an dem Metallelement 5 befestigten Metallschienen vertikal beweglich.

In den zwischen dem Mauerwerk 10 und dem Metallelement 5 verbleibenden Spalt 14 kann ein Dichtmittel in Form einer plastischen Dichtmasse (nicht dargestellt) eingeführt werden, um hierdurch die thermische Leitfähigkeit zwischen dem Mauerwerk 10 und dem Metallelement 5 zu verbessern.

Zur Errichtung des Kühlelementes 4 wird zunächst die untere Lage 11.1 der feuerfesten Steine 11 mit Abstand zu dem Metallelement 5 angeordnet und anschließend zwei Metallschienen 9 jeweils von oben in die Führungsschienen 7 eingelegt und in diesen jeweils nach unten geführt, bis diese mit ihrem jeweils stangenförmigen Abschnitt 9.1 in den Nuten 15 der untersten Lage 11.1 der feuerfesten Steine 11 einliegen. Anschließend wird auf dieser ersten Lage 11.1 die zweite Lage 11.2 der feuerfesten Steine 11 derart angeordnet, dass diese mit ihren auf der Unterseite angeordneten Nuten 22 die Metallschienen 9 umfassen. Anschließend werden die weiteren Metallschienen 9 sowie die weiteren Lagen 11.3, 11.4, 11.5 entsprechend angeordnet, bis das Mauerwerk 10 vollständig errichtet ist.

Schließlich kann der Spalt 14 mit der Dichtmasse verfüllt werden.

Das Mauerwerk 10 kann auch bei einer sich aufgrund einer Temperaturveränderung der feuerfesten Steine 11 ergebenden Wärmeausdehnung der feuerfesten Steine 11 stets ein fugenloses Mauerwerk 10 ausbilden, da die feuerfesten Steine 11 sich bei einer temperaturbedingten Wärmeausdehnung sowohl horizontal entlang der Metallschienen 9 als auch vertikal entlang der Führungsschienen 7 bewegen können. Gleichzeitig sind die feuerfesten Steine 11 durch die Metallschienen 9 stets sicher am Metallelement 5 fixiert.

Bei der alternativen Ausführungsform einer Metallschiene 9a gemäß Figur 11 sind die in der Nut der Führungsschiene 7 einführbaren, tafelförmigen Elemente 9.4a an Stege 9.3a angeschweißt, die in randseitigen Ausnehmungen 23 des zweiten Abschnitts 9.2a angeordnet sind.

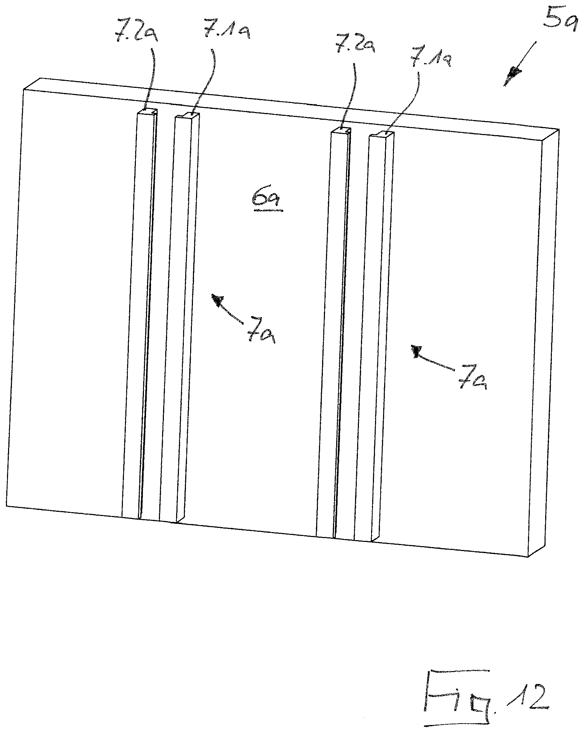

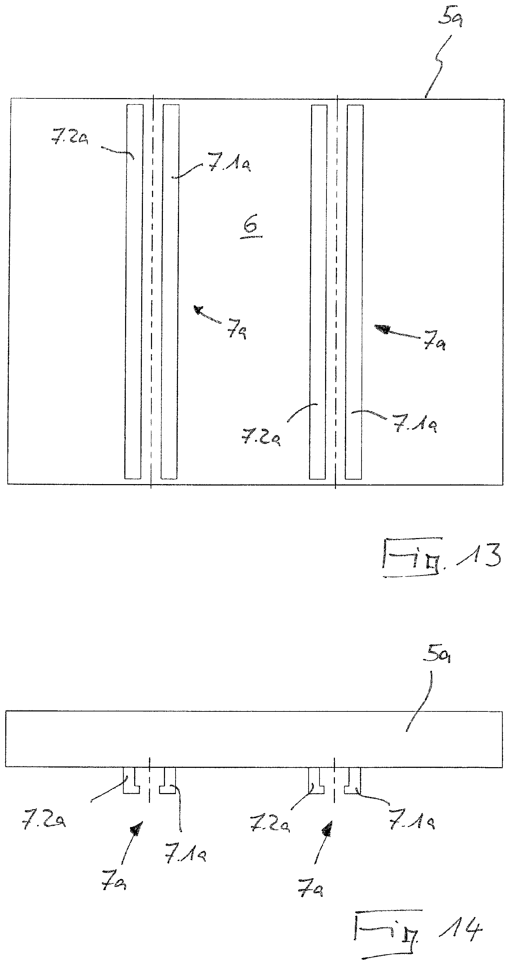

In den Figuren 12 bis 14 ist eine alternative Ausführungsform eines Metallelementes 5a dargestellt, das sich insoweit vom Metallelement 5 gemäß den Figuren 2 bis 9 unterscheidet, als die Führungsschienen 7a an die dem Ofenraum zugewandte Seite 6a des Metallelementes 5a geschweißt sind. Die Stahlprofile der Führungsschienen sind mit 7.1a und 7.2a bezeichnet.

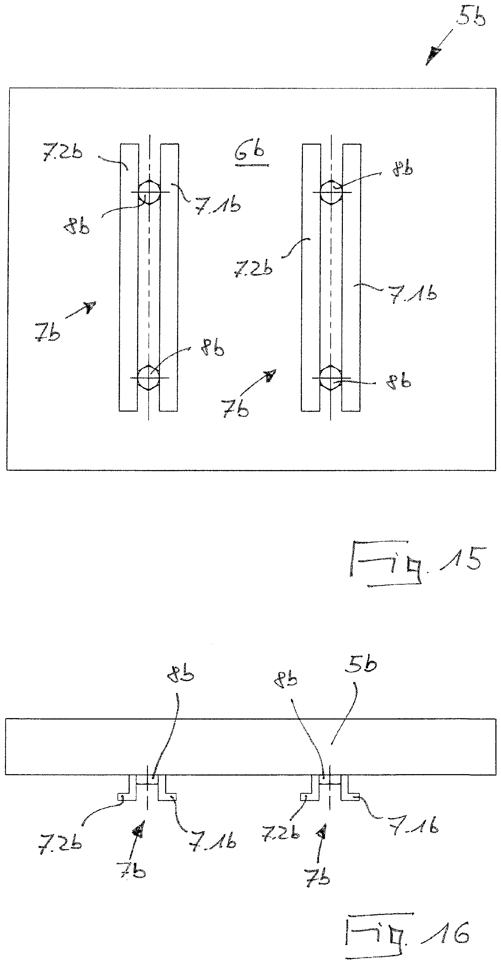

Die in den Figuren 15 bis 16 dargestellte weitere, alternative Ausführungsform eines Metallelementes 5b unterscheidet sich insoweit vom Metallelement 5 gemäß den Figuren 2 bis 9, als sich die Stahlprofile 7.1, 7.2 der Führungsschienen 7b mit ihrem vom Metallelement 5b distalen Ende jeweils voneinander weg erstrecken, so dass die Stahlprofile 7.1, 7.2 jeweils eine Führungsschiene 7 mit einer T-Form ausbilden. An dieser kann die weitere alternative Ausführungsform einer Metallschiene 9b gemäß Figur 17 vertikal führbar befestigt sein, indem diese Metallschiene 9b mit ihrer, im zweiten Abschnitt 9.2b ausgebildeten, hinterschnittenen Ausnehmung 24 in die Führungsschiene 7b eingeführt wird.

## Patentansprüche

1. Metallurgischer Ofen (1), der die folgenden Merkmale umfasst:
1.1 Eine Ofenwandung (2), die einen Ofenraum (3) umschließt;
1.2 die Ofenwandung (3) umfasst wenigstens ein Kühlelement (4), wobei das Kühlelement (4) die folgenden Merkmale umfasst:
1.2.1 ein Metallelement (5), das eine dem Ofenraum (3) zugewandte Seite (6) umfasst;
1.2.2 ein Mauerwerk (10), das gegenüber der dem Ofenraum (3) zugewandten Seite (6) des Metallelementes (5) und mit Abstand zu dieser Seite (6) des Metallelementes (5) angeordnet ist;
1.2.3 das Mauerwerk (10) umfasst feuerfeste Steine (11), die in mehreren Lagen (11.1, 11.2, 11.3, 11.4, 11.5) übereinander angeordnet sind;
1.2.4 Metallschienen (9), die durch das Mauerwerk (10) verlaufen;
1.2.5 Führungsmittel (7, 7.1, 7.2; 9.3, 9.4), über die die Metallschienen (9) vertikal führbar an dem Metallelement (5) befestigt sind.

2. Ofen (1) nach Anspruch 1, wobei das Mauerwerk (10) mörtellos errichtet ist.

3. Ofen (1) nach wenigsten einem der vorhergehenden Ansprüche, wobei die Metallschienen (9) entlang der dem Ofenraum (3) zugewandten Seite (6) des Metallelementes (5) verlaufen.

4. Ofen (1) nach wenigsten einem der vorhergehenden Ansprüche, wobei die Metallschienen (9) in gleichbleibendem Abstand zum Metallelement (5) entlang der dem Ofenraum (3) zugewandte Seite (6) des Metallelementes (5) verlaufen.

5. Ofen (1) nach wenigsten einem der vorhergehenden Ansprüche, wobei die Metallschienen (9) horizontal verlaufen.

6. Ofen (1) nach wenigsten einem der vorhergehenden Ansprüche, wobei die Metallschienen (9) in Nuten (15, 16, 17, 18, 19, 20, 21, 22) verlaufen, die in den feuerfesten Steinen (11) des Mauerwerks (10) ausgebildet sind.

7. Ofen (1) nach Anspruch 6, wobei die Nuten (15, 16, 17, 18, 19, 20, 21, 22) auf der Unterseite, der Oberseite oder sowohl auf der Unterseite als auch auf der Oberseite der feuerfesten Steine (11) ausgebildet sind.

8. Ofen (1) nach wenigsten einem der vorhergehenden Ansprüche, wobei das Mauerwerk (10) eine Seite (13) aufweist, die der Seite (6) des Metallelementes (5) zugewandt ist, die dem Ofenraum (3) zugewandt ist, und wobei die Metallschienen (9) Abschnitte (9.2) aufweisen, die über diese Seite (13) des Mauerwerkes (10) hinausragen.

9. Ofen (1) nach Anspruch 8, wobei sich die Abschnitte (9.2) zumindest entlang der überwiegenden Länge des Mauerwerkes (10) erstrecken.

10. Ofen (1) nach wenigsten einem der vorhergehenden Ansprüche, wobei die Führungsmittel (7, 7.1, 7.2; 9.3, 9.4) als Schienenführung ausgebildet sind.

11. Ofen (1) nach Anspruch 10, wobei die Schienenführung (7, 7.1, 7.2; 9.3, 9.4) Führungsschienen (7) umfasst, an denen die Metallschienen (9) vertikal führbar angeordnet sind.

12. Ofen (1) nach Anspruch 11, wobei die Führungsschienen (7) an der dem Ofenraum (3) zugewandte Seite des Metallelementes (5) angeordnet sind.

13. Ofen (1) nach wenigsten einem der vorhergehenden Ansprüche, wobei zwischen dem Metallelement (5) und dem Mauerwerk (10) ein Dichtmittel angeordnet ist.

14. Ofen (1) nach wenigsten einem der vorhergehenden Ansprüche, wobei der Ofenraum (3) zur Aufnahme einer Metallschmelze ausgebildet ist.

15. Ofen (1) nach wenigsten einem der vorhergehenden Ansprüche, der zur Gewinnung von Kupfer nach dem Schwebeschmelzverfahren ausgebildet ist.

## Claims

1. A metallurgical furnace (1) comprising the following features:
1.1 a furnace wall (2) enclosing a furnace chamber (3);
1.2 the furnace wall (3) comprises at least one cooling element (4), wherein the cooling element (4) comprises the following features:
1.2.1 a metal element (5) comprising a side (6) facing the furnace chamber (3);
1.2.2 a masonry (10) arranged opposite the side (6) of the metal element (5) facing the furnace chamber (3) and at a distance from this side (6) of the metal element (5);
1.2.3 the masonry (10) comprises refractory bricks (11) arranged in several layers (11.1, 11.2, 11.3, 11.4, 11.5) one above the other;
1.2.4 metal rails (9) extending through the masonry (10);
1.2.5 guide means (7, 7.1, 7.2; 9.3, 9.4) by means of which the metal rails (9) are vertically guidable fastened to the metal element (5).

2. Furnace (1) according to claim 1, wherein the masonry (10) is erected without mortar.

3. Furnace (1) according to at least one of the preceding claims, wherein the metal rails (9) run along the side (6) of the metal element (5) facing the furnace chamber (3).

4. Furnace (1) according to at least one of the preceding claims, wherein the metal rails (9) run at a constant distance from the metal element (5) along the side (6) of the metal element (5) facing the furnace chamber (3).

5. Furnace (1) according to at least one of the preceding claims, wherein the metal rails (9) run horizontally.

6. Furnace (1) according to at least one of the preceding claims, wherein the metal rails (9) run in grooves (15, 16, 17, 18, 19, 20, 21, 22) formed in the refractory bricks (11) of the masonry (10).

7. Furnace (1) according to claim 6, wherein the grooves (15, 16, 17, 18, 19, 20, 21, 22) are formed on the bottom side, the top side or both on the bottom side and the top side of the refractory bricks (11).

8. Furnace (1) according to at least one of the preceding claims, wherein the masonry (10) has a side (13) facing the side (6) of the metal element (5) facing the furnace chamber (3), and wherein the metal rails (9) have sections (9.2) projecting beyond said side (13) of the masonry (10).

9. Furnace (1) according to claim 8, wherein the sections (9.2) extend at least along the predominant length of the masonry (10).

10. Furnace (1) according to at least one of the preceding claims, wherein the guide means (7, 7.1, 7.2; 9.3, 9.4) are designed as rail guide.

11. Furnace (1) according to claim 10, wherein the rail guide (7, 7.1, 7.2; 9.3, 9.4) comprises guide rails (7) on which the metal rails (9) are vertically guidable arranged.

12. Furnace (1) according to claim 11, wherein the guide rails (7) are arranged on the side of the metal element (5) facing the furnace chamber (3).

13. Furnace (1) according to at least one of the preceding claims, wherein a sealing means is arranged between the metal element (5) and the masonry (10).

14. Furnace (1) according to at least one of the preceding claims, wherein the furnace chamber (3) is designed to receive a molten metal.

15. Furnace (1) according to at least one of the preceding claims, which is designed for obtaining copper by the flash smelting method.

## Revendications

1. Four métallurgique (1), lequel comprend les caractéristiques suivantes :
1.1 une paroi de four (2) qui renferme une chambre de four (3) ;
1.2 la paroi de four (2) comprend au moins un élément de refroidissement (4), dans lequel l'élément de refroidissement (4) comprend les caractéristiques suivantes :
1.2.1 un élément métallique (5) qui comprend un côté (6) tourné vers la chambre de four (3) ;
1.2.2 une maçonnerie (10) disposée en vis-à-vis du côté (6), tourné vers la chambre de four (3), de l'élément métallique (5) et à distance par rapport à ce côté (6) de l'élément métallique (5) ;
1.2.3 la maçonnerie (10) comprend des pierres réfractaires (11) disposées en plusieurs couches (11.1, 11.2, 11.3, 11.4, 11.5) les unes au-dessus des autres ;
1.2.4 des rails métalliques (9) qui s'étendent à travers la maçonnerie (10) ;
1.2.5 des moyens de guidage (7, 7.1, 7.2; 9.3, 9.4) par l'intermédiaire desquels les rails métalliques (9) sont fixés de manière à pouvoir être guidés verticalement à l'élément métallique (5).

2. Four (1) selon la revendication 1, dans lequel la maçonnerie (10) est érigée sans mortier.

3. Four (1) selon l'une au moins des revendications précédentes, dans lequel les rails métalliques (9) s'étendent le long du côté (6), tourné vers la chambre de four (3), de l'élément métallique (5).

4. Four (1) selon l'une au moins des revendications précédentes, dans lequel les rails métalliques (9) s'étendent à une distance restant égale par rapport à l'élément métallique (5) le long du côté (6), tourné vers la chambre de four (3), de l'élément métallique (5).

5. Four (1) selon l'une au moins des revendications précédentes, dans lequel les rails métalliques (9) s'étendent horizontalement.

6. Four (1) selon l'une au moins des revendications précédentes, dans lequel les rails métalliques (9) s'étendent dans des rainures (15, 16, 17, 18, 19, 20, 21, 22) réalisées dans les pierres réfractaires (11) de la maçonnerie (10).

7. Four (1) selon la revendication 6, dans lequel les rainures (15, 16, 17, 18, 19, 20, 21, 22) sont réalisées sur le dessous, le dessus, ou sur le dessous tout comme également le dessus des pierres réfractaires (11).

8. Four (1) selon l'une au moins des revendications précédentes, dans lequel la maçonnerie (10) présente un côté (13) tourné vers le côté (6), de l'élément métallique (5), qui est tourné vers la chambre de four (3), et dans lequel les rails métalliques (9) présentent des parties (9.2) qui font saillie par rapport à ce côté (13) de la maçonnerie (10).

9. Four (1) selon la revendication 8, dans lequel les parties (9.2) s'étendent au moins le long de la longueur essentielle de la maçonnerie (10).

10. Four (1) selon l'une au moins des revendications précédentes, dans lequel les moyens de guidage (7, 7.1, 7.2 ; 9.3, 9.4) sont réalisés en tant que guidage à rails.

11. Four (1) selon la revendication 10, dans lequel le guidage à rails (7, 7.1, 7.2 ; 9.3, 9.4) comprend des rails de guidage (7) sur lesquels les rails métalliques (9) sont disposés de manière à pouvoir être guidés verticalement.

12. Four (1) selon la revendication 11, dans lequel les rails de guidage (7) sont disposés sur le côté, tourné vers la chambre de four (3), de l'élément métallique (5).

13. Four (1) selon l'une au moins des revendications précédentes, dans lequel un moyen d'étanchéité est disposé entre l'élément métallique (5) et la maçonnerie (10).

14. Four (1) selon l'une au moins des revendications précédentes, dans lequel la chambre de four (3) est réalisée pour la réception d'un bain de fusion.

15. Four (1) selon l'une au moins des revendications précédentes, lequel est réalisé pour obtenir du cuivre selon le procédé de fusion par lévitation.
